# EUROPÄISCHE PATENTANMELDUNG

(11) **EP 4 116 826 A1**
(43) Veröffentlichungstag der Anmeldung: **11.01.2023**
(21) Anmeldenummer: 21183631.7
(22) Anmeldetag: 05.07.2021
(51) Int. Cl.: G06F 9/50, G06F 9/54

(54) **VERFAHREN ZUR ABGESICHERTEN BEREITSTELLUNG VON RECHENLEISTUNG DURCH EINE MEHRZAHL VON TEILNEHMENDEN FAHRZEUGEN ALS TEIL EINES INTELLIGENTEN VERKEHRSSYSTEMS, SYSTEM, TELEKOMMUNIKATIONSNETZ UMFASSEND WENIGSTENS EINE ANWENDUNGSSERVERENTITÄT UND/ODER EINE EDGE-CLOUD-FUNKTIONALITÄT, COMPUTERPROGRAMM UND COMPUTERLESBARES MEDIUM**

(71) Anmelder: Deutsche Telekom AG, 53113 Bonn (DE)
(72) Erfinder: SCHMITT, Florian-Leon, 53227 Bonn (DE); SUDHOLT, Frank, 53604 Bad Honnef (DE)
(74) Vertreter: Schwöbel, Thilo K.

(57) **Zusammenfassung**

Es wird ein Verfahren zur abgesicherten Bereitstellung von Rechenleistung durch eine Mehrzahl von teilnehmenden Fahrzeugen als Teil eines intelligenten Verkehrssystems umfassend wenigstens ein Telekommunikationsnetz, wobei jedes der Mehrzahl von teilnehmenden Fahrzeugen wenigstens eine zumindest zeitweise und/oder teilweise auslagerbare Rechenressource aufweist, wobei die von der Mehrzahl der teilnehmenden Fahrzeugen auslagerbaren Rechenressourcen als Rechnerverbund einer Anwendungsserverentität und/oder einer Edge-Cloud-Funktionalität und/oder einem weiteren Fahrzeug zur Verfügung gestellt wird, wobei das Verfahren die nachfolgenden Verfahrensschritte aufweist:
-- in einem ersten Schritt wird der Rechnerverbund der Mehrzahl von teilnehmenden Fahrzeugen initiiert,
-- in einem zweiten Schritt stellt der Rechnerverbund die auslagerbaren Rechenressourcen der Anwendungsserverentität und/oder der Edge-Cloud-Funktionalität und/oder dem weiteren Fahrzeug zur Verfügung.

## Beschreibung

### Stand der Technik

Die Erfindung betrifft ein Verfahren zur abgesicherten Bereitstellung von Rechenleistung durch eine Mehrzahl von teilnehmenden Fahrzeugen als Teil eines intelligenten Verkehrssystems umfassend wenigstens ein Telekommunikationsnetz, wobei jedes der Mehrzahl von teilnehmenden Fahrzeugen wenigstens eine zumindest zeitweise und/oder teilweise auslagerbare Rechenressource aufweist.

Die Erfindung betrifft des Weiteren ein System zur abgesicherten Bereitstellung von Rechenleistung durch eine Mehrzahl von teilnehmenden Fahrzeugen als Teil eines intelligenten Verkehrssystems umfassend wenigstens ein Telekommunikationsnetz, wobei jedes der Mehrzahl von teilnehmenden Fahrzeugen wenigstens eine zumindest zeitweise und/oder teilweise auslagerbare Rechenressource aufweist.

Die Erfindung betrifft ferner ein Telekommunikationsnetz, umfassend wenigstens eine Anwendungsserverentität und/oder eine Edge-Cloud-Funktionalität, geeignet zur abgesicherten Bereitstellung von Rechenleistung durch eine Mehrzahl von teilnehmenden Fahrzeugen bei einem erfindungsgemäßen System bzw. mittels eines erfindungsgemäßen Verfahrens.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

In modernen Fahrzeugen, die am Verkehrsgeschehen eines intelligenten Verkehrssystems teilnehmen, erfordert die zunehmende Verbreitung von assistiertem und/oder automatisiertem Fahren bzw. der assistierten und/oder automatisierten Steuerung von Fahrzeugen, dass immer mehr Berechnungen im Fahrzeug selbst durchgeführt werden, weshalb die in ein Fahrzeug eingebaute, d.h. lokal im Fahrzeug vorhandene, Rechenleistung (aufgrund der Notwendigkeit der Durchführung von rechenintensiven Anwendungsfällen) immer mehr steigt und analog auch die Dimensionierungen der entsprechenden Fahrzeugcomputer.

In der Regel wird jedoch nicht zu jedem Zeitpunkt bzw. ständig die volle lokal im Fahrzeug vorhandene Rechenleistung solcher Rechenressourcen, die auch als Hochleistungscomputer bezeichnet werden können, benötigt.

### Offenbarung der Erfindung

Der Erfindung liegt die Aufgabe zugrunde, ein Verfahren zur abgesicherten Bereitstellung von Rechenleistung durch eine Mehrzahl von teilnehmenden Fahrzeugen bereitzustellen, wobei jedes der Mehrzahl von teilnehmenden Fahrzeugen wenigstens eine zumindest zeitweise und/oder teilweise auslagerbare Rechenressource aufweist, wobei die von der Mehrzahl der teilnehmenden Fahrzeugen auslagerbaren Rechenressourcen als Rechnerverbund einer Anwendungsserverentität [application server entity] und/oder einer Edge-Cloud-Funktionalität und/oder einem weiteren Fahrzeug zur Verfügung gestellt wird.

Die Aufgabe wird erfindungsgemäß gelöst durch ein Verfahren zur abgesicherten Bereitstellung von Rechenleistung durch eine Mehrzahl von teilnehmenden Fahrzeugen als Teil eines intelligenten Verkehrssystems umfassend wenigstens ein Telekommunikationsnetz, wobei jedes der Mehrzahl von teilnehmenden Fahrzeugen wenigstens eine zumindest zeitweise und/oder teilweise auslagerbare Rechenressource aufweist, wobei die von der Mehrzahl der teilnehmenden Fahrzeugen auslagerbaren Rechenressourcen als Rechnerverbund einer Anwendungsserverentität und/oder einer Edge-Cloud-Funktionalität und/oder einem weiteren Fahrzeug zur Verfügung gestellt wird, wobei das Verfahren die nachfolgenden Verfahrensschritte aufweist:
-- in einem ersten Schritt wird der Rechnerverbund der Mehrzahl von teilnehmenden Fahrzeugen initiiert,
-- in einem zweiten Schritt stellt der Rechnerverbund die auslagerbaren Rechenressourcen der Anwendungsserverentität und/oder der Edge-Cloud-Funktionalität und/oder dem weiteren Fahrzeug zur Verfügung.

Es ist dadurch gemäß der vorliegenden Erfindung in vorteilhafter Weise möglich, dass in vergleichsweise einfacher Art und Weise ungenutzte Rechenkapazitäten von in Fahrzeugen vorhandenen Rechenressourcen genutzt werden können, da üblicherweise solche Fahrzeuge nicht ständig die volle Rechenleistung der vorhandenen Computer benötigen.

Parallel Computing ist ein zunehmend wichtiger werdender Trend im Bereich der Informatik: Einerseits gibt es klassische Problemstellungen, die sich am besten parallel bearbeiten lassen, wie etwa jegliche Errechnung von Simulationen. Andererseits wird versucht, sehr komplexe Aufgaben zu parallelisieren, sodass sie von getrennten Einheiten gleichzeitig errechnet werden können.

Eine Anwendung, die Machine Learning - bzw. maschinelles Lernen - einsetzt, setzt in der Regel auf statistische Methoden wie die lineare Regression und versucht somit mit intensivem Rechnen Näherungswerte und somit Vorhersagen treffen zu können. Die Parallelisierbarkeit der Berechnung ist hier ausschlaggebend, da sich die Rechenleistung stark erhöhen lässt, wodurch wiederum bessere Ergebnisse in kürzerer Zeit entstehen können.

Um die ungenutzten Rechenkapazitäten für Parallel Computing nutzen zu können, müssen die Fahrzeuge bzw. deren Rechenleistungen zusammengeschaltet und entsprechend gemanagt werden. Erfindungsgemäß wird ein Verfahren bereitgestellt, mittels dem die Fahrzeuge bzw. deren Computer bei Aufbau, Verwaltung, und Beendigung eines solchen Rechnerverbunds unterstützt, und dabei auch die nötigen Steuerungsfunktionen für Authentisierung, Kommunikation und Abrechnung zur Verfügung stellt.

Erfindungsgemäß ist es vorgesehen, dass - typischerweise in einem räumlich bzw. geographisch benachbarten bzw. zusammenhängenden Gebiet oder Bereich mehrere Fahrzeuge befinden, welche jeweils eine zumindest zeitweise und/oder teilweise auslagerbare Rechenressource aufweisen. Damit zumindest ein Teil solcher Fahrzeuge ihre zeitweise ungenutzten Rechenkapazitäten bündeln und/oder bereitstellen können, ist es erfindungsgemäß vorgesehen, dass dies in Form einer abgesicherten Bereitstellung dieser Rechenleistung (bzw. eines Teils der vorhandenen Gesamtrechenleistung) durch die Mehrzahl von teilnehmenden Fahrzeugen und insbesondere als Teil eines intelligenten Verkehrssystems erfolgt. Hierbei umfasst das intelligente Verkehrssystem wenigstens ein Telekommunikationsnetz, welches typischerweise als Mobilfunckommunikationsnetz, insbesondere als zelluläres Mobilfunkkommunikationsnetz, ausgebildet ist. Jedes der Mehrzahl von teilnehmenden Fahrzeugen stellt hierbei wenigstens einen Teil und/oder zumindest zeitweise Rechenressourcen zur Verfügung, so dass diese auslagerbaren Rechenressourcen als Rechnerverbund einer Anwendungsserverentität und/oder einer Edge-Cloud-Funktionalität und/oder einem weiteren Fahrzeug zur Verfügung gestellt werden können.

Erfindungsgemäß ist vorgesehen, dass in einem ersten Schritt der Rechnerverbund der Mehrzahl von teilnehmenden Fahrzeugen initiiert wird und dass in einem zweiten Schritt der Rechnerverbund die auslagerbaren Rechenressourcen der Anwendungsserverentität und/oder der Edge-Cloud-Funktionalität und/oder dem weiteren Fahrzeug zur Verfügung stellt.

Gemäß einer bevorzugten Ausführungsform der vorliegenden Erfindung ist es vorgesehen, dass in einem dritten Schritt der Rechnerverbund pausiert, unterbrochen oder beendet wird, wobei insbesondere ein Vergütungsmodel für die zur Verfügung gestellte Rechenressource angewandt wird, wobei insbesondere der Rechnerverbund zur Bearbeitung oder Durchführung von hochparallelisierten Berechnungen gebildet wird.

Hierdurch ist es erfindungsgemäß insbesondere vorteilhaft vorgesehen, dass für die ausgelagerte und von weiteren Fahrzeugen übernommene Rechenkapazität eine Vergütung entrichtet wird und somit ein Anreiz für die Zurverfügungstellung von Rechenkapazität vorliegt.

Gemäß einer weiteren Ausführungsform der vorliegenden Erfindung ist es vorgesehen, dass zur Initiierung des Rechnerverbunds und zur Realisierung der Bereitstellung von Rechenleistung an die Anwendungsserverentität und/oder an die Edge-Cloud-Funktionalität und/oder an das weitere Fahrzeug das Telekommunikationsnetz genutzt wird, insbesondere eine Fahrzeug-zu-Fahrzeug Kommunikationsfunktionalität, V2V, vehicle-to-vehicle communication functionality, und/oder eine Fahrzeug-zu-X Kommunikationsfunktionalität, V2X, vehicle-to-X communication functionality, insbesondere unter Nutzung eines PC5 sidelink Modus 3 oder Modus 4.

Hierdurch ist es erfindungsgemäß in vorteilhafter Weise möglich, dass erfindungsgemäß über mehrere mögliche Kommunikationswege eine Kommunikation zum Austausch von Daten für die Herstellung und/oder den Betrieb des Rechnerverbunds realisierbar ist.

Gemäß einer weiteren Ausführungsform der vorliegenden Erfindung ist es vorgesehen, dass die Initiierung - im ersten Schritt - des Rechnerverbunds eine Authentisierung und/oder eine Authorisierung und/oder die Herstellung einer Vertraulichkeit oder einer Verschlüsselung der Mehrzahl von teilnehmenden Fahrzeugen umfasst, insbesondere unter Verwendung einer Öffentliche-Schlüssel-Infrastruktur, public key infrastructure, wobei insbesondere die Anwendungsserverentität und/oder die Edge-Cloud-Funktionalität die Authentisierung und/oder die Authorisierung und/oder die Herstellung der Vertraulichkeit oder der Verschlüsselung der Mehrzahl von teilnehmenden Fahrzeugen übernimmt.

Hierdurch ist es erfindungsgemäß in vorteilhafter Weise möglich, dass die Kommunikation zum Austausch von Daten für die Herstellung und/oder den Betrieb des Rechnerverbunds in besonderer Weise abgesichert erfolgen kann.

Gemäß einer weiteren Ausführungsform der vorliegenden Erfindung ist es vorgesehen, dass zumindest ein Teil der Mehrzahl von teilnehmenden Fahrzeugen zum autonomen Fahren mit wenigstens dem Automatisierungsgrad 2 (level 2, Assistierter Modus), bevorzugt wenigstens dem Automatisierungsgrad 3 (level 3, Automatisierter Modus), besonders bevorzugt wenigstens dem Automatisierungsgrad 4 (level 4, Autonomer Modus, Hochautomatisierung), besonders bevorzugt wenigstens dem Automatisierungsgrad 5 (level 5, Autonomer Modus, Vollautomatisierung) ausgebildet sind.

Gemäß einer weiteren Ausführungsform der vorliegenden Erfindung ist es vorgesehen, dass zumindest ein Teil der Mehrzahl von teilnehmenden Fahrzeugen sich in einem Zustand geringerer Verkehrsanforderungen befindet, insbesondere in einer Stausituation und/oder einer Situation verminderter Geschwindigkeit und/oder in einer Park- oder Haltesituation des Fahrzeugs, wobei es sich im Fall einer Park- oder Haltesituation insbesondere um eine Ladesituation eines batterieelektrischen Fahrzeugs oder eines Plug-In-Hybrid-Fahrzeugs handelt.

Hierbei ist es erfindungsgemäß vorteilhaft möglich, dass auch in Situationen einer verminderten Anforderung an vorhandene Rechenressourcen diese sinnvoll und vergütet verwendet werden können.

Gemäß einer weiteren Ausführungsform der vorliegenden Erfindung ist es vorgesehen, dass die Initiierung - im ersten Schritt - des Rechnerverbunds umfasst, dass eines der Fahrzeuge der Mehrzahl von teilnehmenden Fahrzeugen den Rechnerverbund initiiert und insbesondere eine Anfragenachricht an andere Fahrzeuge in der Umgebung sendet.

Des Weiteren wird die Aufgabe gelöst durch ein System zur abgesicherten Bereitstellung von Rechenleistung durch eine Mehrzahl von teilnehmenden Fahrzeugen als Teil eines intelligenten Verkehrssystems umfassend wenigstens ein Telekommunikationsnetz, wobei jedes der Mehrzahl von teilnehmenden Fahrzeugen wenigstens eine zumindest zeitweise und/oder teilweise auslagerbare Rechenressource aufweist, wobei die von der Mehrzahl der teilnehmenden Fahrzeugen auslagerbaren Rechenressourcen als Rechnerverbund einer Anwendungsserverentität und/oder einer Edge-Cloud-Funktionalität und/oder einem weiteren Fahrzeug zur Verfügung gestellt wird, wobei das System derart konfiguriert ist, dass:
-- der Rechnerverbund der Mehrzahl von teilnehmenden Fahrzeugen initiiert wird,
-- der Rechnerverbund die auslagerbaren Rechenressourcen der Anwendungsserverentität und/oder der Edge-Cloud-Funktionalität und/oder dem weiteren Fahrzeug zur Verfügung stellt.

Es ist dadurch gemäß der vorliegenden Erfindung in vorteilhafter Weise möglich, ein zum erfindungsgemäßen Verfahren korrespondierendes erfindungsgemäßes System bereitzustellen und somit zu einer verbesserten abgesicherten Bereitstellung von Rechenleistung zu gelangen.

Die Aufgabe wird ferner gelöst durch ein Telekommunikationsnetz, umfassend eine Anwendungsserverentität und/oder eine Edge-Cloud-Funktionalität, zur Verwendung in einem erfindungsgemäßen System oder einem erfindungsgemäßen Verfahren.

Es ist dadurch gemäß der vorliegenden Erfindung in vorteilhafter Weise möglich, eine zum erfindungsgemäßen Verfahren korrespondierendes erfindungsgemäßes Telekommunikationsnetz umfassend die Anwendungsserverentität und/oder die Edge-Cloud-Funktionalität bereitzustellen und somit zu einer verbesserten abgesicherten Bereitstellung von Rechenleistung zu gelangen.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einer programmierbaren Einrichtung des Fahrzeugs und/oder eines Netzknotens des Telekommunikationsnetzes und/oder einer Anwendungsserverentität und/oder einer Edge-Cloud-Funktionalität, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einer programmierbaren Einrichtung des Fahrzeugs und/oder eines Netzknotens des Telekommunikationsnetzes und/oder der Anwendungsserverentität und/oder der Edge-Cloud-Funktionalität, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Zeichnungen
- **Figur 1**: zeigt eine Prinzipskizze zur Veranschaulichung eines abgesicherten Informationsaustauschs zwischen verschiedenen Elementen oder Instanzen eines intelligenten Verkehrssystems.
- **Figur 2**: zeigt schematisch ein Kommunikationsdiagramm des erfindungsgemäßen Verfahrens zur abgesicherten Bereitstellung von Rechenleistung durch eine Mehrzahl von teilnehmenden Fahrzeugen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

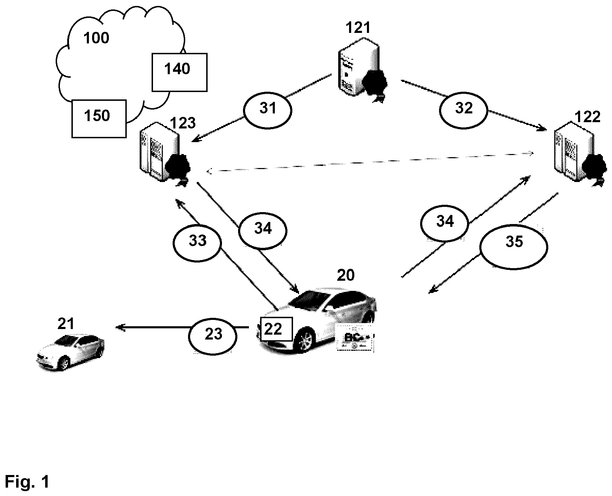

In Figur 1 ist schematisch eine Prinzipskizze zur Veranschaulichung eines abgesicherten Informationsaustauschs zwischen verschiedenen Elementen, Komponenten bzw. Instanzen eines intelligenten Verkehrssystems dargestellt. Das intelligente Verkehrssystem wirkt jedenfalls zusammen mit einem Telekommunikationsnetz 100 bzw. das Telekommunikationsnetz 100 ist Teil des intelligenten Verkehrssystems. Das Telekommunikationsnetz 100 umfasst insbesondere eine Anwendungsserverentität 140 und/oder eine Edge-Cloud-Funktionalität 150 (bzw. eine Anwendungsserverentität 140 und/oder eine Edge-Cloud-Funktionalität 150 ist dem Telekommunikationsnetz 100 zugeordnet). Beispielhaft ist ein Fahrzeug 20 und ein weiteres Fahrzeug 21 dargestellt. Zum Austausch gesicherter oder abgesicherter Nachrichten 23 zwischen zwei Fahrzeugen 20, 21 (d.h. sowohl - wie in Figur 1 dargestellt - in Richtung vom Fahrzeug 20 zum weiteren Fahrzeug 21 als auch (in Figur 1 nicht dargestellt) in Richtung vom weiteren Fahrzeug 21 zum Fahrzeug 20), jedoch auch zwischen dem Fahrzeug 20 und einer Mehrzahl von weiteren Fahrzeugen (diese Mehrzahl weiterer Fahrzeuge ist in Figur 1 nicht dargestellt, sondern lediglich, stellvertretend, das weitere Fahrzeug 21), ist eine Sicherheitsarchitektur des intelligenten Verkehrssystems vorgesehen und in Figur 1 schematisch dargestellt. Eine Root-CA Entität (Wurzel-Zertifikats-Autoritäts-Entität) 121 erzeugt oder umfasst (bzw. speichert, ggf. in verschlüsselter Form) wenigstens eine Zertifikatsinformation. In Figur 1 ist eine Ausführungsform eines solchen Sicherheitsmanagementsystem (Security Management System) eines intelligenten Verkehrssystem (intelligent traffic system) mit einer einzigen Root-CA Entität 121 dargestellt, wobei jedoch auch solche Systeme mit Mehrfach Root-CA Entitäten möglich sind. Die Zertifikatsinformation (oder zumindest ein Teil davon) der Root-CA Entität 121 wird als Zertifikat 31 bzw. Zertifikat 32 in einer Kommunikation der Root-CA Entität 121 mit einer Authorization Authority Entität (Autorisierungs-Autoritäts-Entität) 122 und/oder mit einer Enrolment Authority Entität (Anmeldungs-Autoritäts-Entität) 123 ausgetauscht oder verwendet. Die Root-CA Entität 121 ist im exemplarisch dargestellten Ausführungsbeispiel die höchstrangige Zertifikats-Autoritäts-Entität in der Zertifizierungshierarchie. Sie erbringt für die Enrolment Authority Entität 123 und die Authorization Authority Entität 122 den Nachweis, dass sie Anmeldedaten bzw. Autorisierungstickets ausstellen darf. Die Enrolment Authority Entität 123 entspricht der Einheit oder Entität des Sicherheitsmanagementssystems, die für die Verwaltung des Lebenszyklus von Anmeldeinformationen verantwortlich ist. Authentifiziert einen Teilnehmer des intelligenten Verkehrssystems ITS-S (wie etwa das Fahrzeug 20) und gewährt (über den Austausch einer kanonischen Identitätsinformation und eines öffentlichen Schlüssels 33 sowie einer Anmeldungs Identitätsinformation (Enrolment ID) 34) Zugang zur Kommunikation des intelligenten Verkehrssystems. Die Authorization Authority Entität 122 entspricht der Einheit oder Entität des Sicherheitsmanagementsystems, die für die Ausstellung und Überwachung der Verwendung von Berechtigungstickets verantwortlich ist und bietet einem Teilnehmer des intelligenten Verkehrssystems ITS-S (wie etwa das Fahrzeug 20) (über den Austausch der Anmeldungs-Identitätsinformation (Enrolment ID) 34 und eines pseudonymisierten Autorisierungszertifikats (pseudonymous authorization certificate) 35) einen verbindlichen Nachweis, dass die Berechtigung für die Nutzung bestimmter ITS-Dienste vorliegt. Die die Enrolment Authority Entität 123 und die Authorization Authority Entität 122 bzw. zusätzlich noch die Root-CA Entität 121 werden nachfolgend auch als PKI-Komponenten (public key infrastructure Komponenten, Öffentliche Schlüssel Infrastruktur Komponenten) bezeichnet.

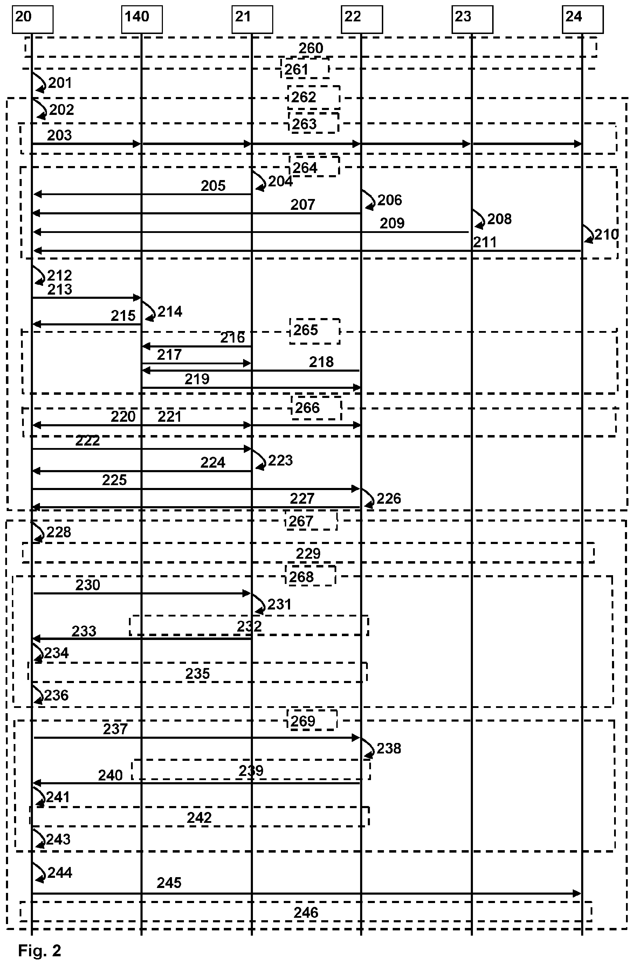

In Figur 2 ist schematisch ein Kommunikationsdiagramm des erfindungsgemäßen Verfahrens zur abgesicherten Bereitstellung von Rechenleistung durch eine Mehrzahl von teilnehmenden Fahrzeugen dargestellt. Das Fahrzeug 20 wird dabei als in einer räumlichen Umgebung (bzw. in geographischer Nähe) angenommen zu weiteren Fahrzeugen 21, 22, 23, 24, nachfolgend auch als erstes weiteres Fahrzeug 21, zweites weiteres Fahrzeug 22, drittes weiteres Fahrzeug 23 und viertes weiteres Fahrzeug 24 (in räumlicher Umgebung bzw. Nähe) bezeichnet. Ferner geht aus dem Kommunikationsdiagramm der Figur 2 hervor, dass das Fahrzeug 20 (und ebenfalls die weiteren Fahrzeuge) mit einer zentralen bzw. netzseitigen Instanz, insbesondere mit der Anwendungsserverentität 140 und/oder der Edge-Cloud-Funktionalität 150 (bzw. generell mit dem Telekommunikationsnetz 100 bzw. einem Netzknoten davon) kommuniziert. Stellvertretend hierfür ist in Figur 2 lediglich das Bezugszeichen 140 der Anwendungsserverentität angegeben, jedoch soll hierunter ebenfalls - beispielsweise - eine Basisstation eines Zugangsnetzes des Telekommunikationsnetzes 100 verstanden werden, insbesondere als Realisierung eines V2X-Anwendungsservers (V2X application server, vehicle to x application server) 140.

Generell gliedert sich die Kommunikation bzw. das Kommunikationsdiagramm des erfindungsgemäßen Verfahrens im Wesentlichen in die verschiedenen Abschnitte 260 bis 269 bzw. Unterabschnitte. Im ersten Abschnitt 260 werden hierbei die Voraussetzungen für die erfindungsgemäße Realisierung eines Rechnerverbunds realisiert bzw. geschaffen, insbesondere die Bereitstellung aktueller Zertifikate (insbesondere durch die PKI-Komponenten) und/oder die Registrierung des Ad-hoc-Rechnerverbunds bzw. die Registrierung der Möglichkeit zur Realisierung von Ad-hoc-Rechnerverbunde (insbesondere am oder beim V2X-Anwendungsserver); dies entspricht insbesondere der grundsätzlichen Bereitschaft eines Fahrzeugs bzw. eines der weiteren Fahrzeuge 21, 22, 23, 24 am Rechenpowersharing bzw. am Rechnerverbund teilzunehmen. Der zweite Abschnitt 261 behandelt die Trigger zum Anstoßen des Rechnerverbunds. Der dritte Abschnitt 262 umfasst den vierten Abschnitt 263, den fünften Abschnitt 264, den sechsten Abschnitt 265 und den siebten Abschnitt 266 als Unterabschnitte; im dritten Abschnitt 262 wird der Rechnerverbund aufgesetzt. Im vierten Abschnitt 263 erfolgt - seitens des Fahrzeugs 20 - eine Anfrage an weitere Fahrzeuge 21, 22, 23, 24 in der Umgebung hinsichtlich der Teilnahme am Rechnerverbund (insbesondere hinsichtlich der Rahmenbedingungen eines solchen Rechnerverbunds). Diese Anfrage erfolgt bevorzugt unter Nutzung einer der beiden oder einer Kombination beider nachfolgender Möglichkeiten: Unter Nutzung einer Multicastnachricht (also eine Nachricht, die an eine Gruppe von Teilnehmern gerichtet ist) oder mehrerer Multicastnachrichten, insbesondere über den PC5 Sidelink Mode 3 über die entsprechende Basisstationseinrichtung (insbesondere eNodeB bzw. gNodeB) des Telekommunikationsnetzes 100, bei welcher das User Equpiment des Fahrzeugs 20 registriert bzw. angebunden (attached) ist; unter Nutzung einer Broadcastnachricht (also eine Rundsendenachricht) oder mehrerer Broadcastnachrichten, insbesondere über den PC5 Sidelink Mode 4. Im fünften Abschnitt 264 erfolgt die Rückmeldung der weiteren Fahrzeuge 21, 22, 23, 24 (an das Fahrzeug 20) entweder zur Teilnahme oder aber zur Nichtteilnahme am geplanten bzw. zu realisierenden Rechnerverbund. Im sechsten Abschnitt 265 erfolgt ein optionaler Informationsaustausch zwischen den Teilnehmenden weiteren Fahrzeugen 21, 22 und der Anwendungsserverentität 140 (und/oder der Edge-Cloud-Funktionalität 150 bzw. generell mit dem Telekommunikationsnetz 100 bzw. einem Netzknoten davon). Im siebten Abschnitt 266 erfolgt ein Austausch von Authentisierungs-/Autorisierungsinformation und/oder von Schlüsselinformationen bzw. Zertifikatinformationen. Der achte Abschnitt 267 umfasst den neunten Abschnitt 268 und den zehnten Abschnitt 269 als Unterabschnitte; im achten Abschnitt 267 wird der Rechnerverbund zur Parallelverarbeitung genutzt bzw. es findet das Parallelcomputing statt. Der neunte Abschnitt 268 umfasst oder betrifft die Verarbeitung durch das erste weitere Fahrzeug 21 und der zehnte Abschnitt 269 umfasst oder betrifft die Verarbeitung durch das zweite weitere Fahrzeug 22, wobei der neunte Abschnitt 268 und der zehnte Abschnitt 269 insbesondere durchaus zeitlich parallel (bzw. gleichzeitig) oder zumindest teilweise zeitlich parallel (bzw. gleichzeitig) stattfinden bzw. durchgeführt werden.

Die verschiedenen Abschnitte 260 bis 269 umfassen die nachfolgend beschriebenen Prozessschritte: In einem ersten Prozessschritt 201 (als Teil des zweiten Abschnitts 261) wird der Bedarf für einen Ad-Hoc-Rechnerverbund erkannt, insbesondere durch das Fahrzeug 20; alternativ (jedoch nicht in Figur 2 dargestellt), könnte dies auch durch den V2X-Anwendungsserver geschehen. Ein zweiter bis siebenundzwanzigster Prozessschritt 202 - 227 sind Teil des dritten Abschnitts 262, d.h. betreffen das Aufsetzen des Rechnerverbunds. Im zweiten Prozessschritt 202 werden die Rahmenbedingungen des Ad-Hoc-Rechnerverbunds definiert, ebenfalls insbesondere durch das Fahrzeug 20; alternativ (jedoch nicht in Figur 2 dargestellt), könnte dies auch durch den V2X-Anwendungsserver geschehen. Im dritten Prozessschritt 203 (als Teil des vierten Abschnitts 263) erfolgt - insbesondere seitens des Fahrzeugs 20 - eine Anfrage an die weiteren Fahrzeuge 21, 22, 23, 24 in der Umgebung hinsichtlich der Teilnahme am Rechnerverbund (insbesondere hinsichtlich der Rahmenbedingungen eines solchen Rechnerverbunds), insbesondere unter Nutzung einer oder mehrerer Multicastnachrichten (also Nachrichten, die an eine Gruppe von Teilnehmern gerichtet ist) und/oder unter Nutzung einer oder mehrerer Broadcastnachrichten (also Rundsendenachrichten). Der vierte bis elfte Prozessschritt 204 - 211 ist Teil des fünften Abschnitts 264. Im vierten Prozessschritt 204 wird durch das erste weitere Fahrzeug 21 geprüft, ob eine Signaturinformation, welche vom ersten Fahrzeug 20 erhalten wurde, in Ordnung ist und entschieden, ob am geplanten (bzw. vom Fahrzeug 20 vorgeschlagenen) Rechnerverbund teilgenommen werden soll (im Beispiel der Figur 2 als positive bzw. bejahende Antwortnachricht des ersten weiteren Fahrzeugs 21). Im fünften Prozessschritt 205 wird eine entsprechende Nachricht zum ersten Fahrzeug 20 gesendet. Im sechsten Prozessschritt 206 wird durch das zweite weitere Fahrzeug 22 geprüft, ob eine Signaturinformation, welche vom ersten Fahrzeug 20 erhalten wurde, in Ordnung ist und entschieden, ob am geplanten (bzw. vom Fahrzeug 20 vorgeschlagenen) Rechnerverbund teilgenommen werden soll (im Beispiel der Figur 2 als positive bzw. bejahende Antwortnachricht des zweiten weiteren Fahrzeugs 22). Im siebten Prozessschritt 207 wird eine entsprechende Nachricht zum ersten Fahrzeug 20 gesendet. Im achten Prozessschritt 208 wird durch das dritte weitere Fahrzeug 23 geprüft, ob eine Signaturinformation, welche vom ersten Fahrzeug 20 erhalten wurde, in Ordnung ist und entschieden, ob am geplanten (bzw. vom Fahrzeug 20 vorgeschlagenen) Rechnerverbund teilgenommen werden soll (im Beispiel der Figur 2 als positive bzw. bejahende Antwortnachricht des dritten weiteren Fahrzeugs 23). Im neunten Prozessschritt 209 wird eine entsprechende Nachricht zum ersten Fahrzeug 20 gesendet. Im zehnten Prozessschritt 210 wird durch das vierte weitere Fahrzeug 24 geprüft, ob eine Signaturinformation, welche vom ersten Fahrzeug 20 erhalten wurde, in Ordnung ist und entschieden, ob am geplanten (bzw. vom Fahrzeug 20 vorgeschlagenen) Rechnerverbund teilgenommen werden soll (im Beispiel der Figur 2 als negative bzw. verneinende Antwortnachricht des vierten weiteren Fahrzeugs 24). Im elften Prozessschritt 211 wird eine entsprechende Nachricht zum ersten Fahrzeug 20 gesendet. In einem zwölften Prozessschritt 212 werden durch das Fahrzeug 20 die Rahmenbedingungen (zur Realisierung des Rechnerverbunds) mit den Fahrzeugparametern abgestimmt und es wird entschieden (insbesondere durch das Fahrzeug 20 wie dies in Figur 2 dargestellt ist; alternativ jedoch (und nicht in Figur 2 dargestellt) wird diese Entscheidung durch die Anwendungsserverentität 140 getroffen), welche Fahrzeuge 20, 21, 22, 23, 24, insbesondere welche der weiteren Fahrzeuge 21, 22, 23, 24, am geplanten bzw. zu realisierenden Rechnerverbund teilnehmen; im dargestellten Beispiel wird angenommen, dass lediglich das erste und zweite weitere Fahrzeug 21, 22 am Rechnerverbund teilnehmen. Im dreizehnten Prozessschritt 213 wird eine Anfrage zum Aufsetzen des Rechnerverbunds durch das Fahrzeug 20 an die Anwendungsserverentität 140 gesendet (im Beispiel betreffend einen Rechnerverbund zwischen dem Fahrzeug 20 sowie dem ersten weiteren Fahrzeug 21 und dem zweiten weiteren Fahrzeug 22). Im vierzehnten Prozessschritt 214 wird der Rechnerverbund durch die Anwendungsserverentität 140 aufgesetzt und im fünfzehnten Prozessschritt 215 wird eine solche Konfiguration des Rechnerverbunds an das Fahrzeug 20 mittels einer Nachricht bestätigt. Der sechzehnte bis neunzehnte Prozessschritt 216-219 ist Teil des sechsten Abschnitts 265, welcher jedoch insbesondere lediglich optional vorhanden ist. Im sechzehnten Prozessschritt 216 wird durch das zweite weitere Fahrzeug 22 eine entsprechende Nachricht zur Teilnahme am Rechnerverbund an die Anwendungsserverentität 140 gesendet. Im siebzehnten Prozessschritt 217 wird durch die Anwendungsserverentität 140 eine Information über den Rechnerverbund an das zweite weitere Fahrzeug 22 gesendet. Im achtzehnten Prozessschritt 218 wird durch das erste weitere Fahrzeug 21 eine entsprechende Nachricht zur Teilnahme am Rechnerverbund an die Anwendungsserverentität 140 gesendet. Im neunzehnten Prozessschritt 219 wird durch die Anwendungsserverentität 140 eine Information über den Rechnerverbund an das erste weitere Fahrzeug 21 gesendet. Im zwanzigsten und einundzwanzigsten Prozessschritt 220, 221 erfolgt ausgehend von der Anwendungsserverentität 140 bzw. der PKI-Komponenten der erwähnte Austausch von Authentisierungs-/Autorisierungsinformation und/oder von Schlüsselinformationen bzw. Zertifikatinformationen als Teil des siebten Abschnitts 266. Im zweiundzwanzigsten Prozessschritt 222 wird ausgehend vom Fahrzeug 20 das erste weitere Fahrzeug 21 in den Rechnerverbund aufgenommen bzw. eine entsprechende Nachricht an das erste weitere Fahrzeug 21 gesandt, woraufhin im dreiundzwanzigsten Prozessschritt 223 durch das erste weitere Fahrzeug 21 eine Allokierung (bzw. Zuteilung) von Ressourcen erfolgt und mittels einer im vierundzwanzigsten Prozessschritt 224 an das Fahrzeug 20 gesendeten Nachricht die Verbindung zum ersten weiteren Fahrzeug 21 aufgesetzt wird. Im fünfundzwanzigsten Prozessschritt 225 wird ausgehend vom Fahrzeug 20 das zweite weitere Fahrzeug 22 in den Rechnerverbund aufgenommen bzw. eine entsprechende Nachricht an das zweite weitere Fahrzeug 22 gesandt, woraufhin im sechsundzwanzigsten Prozessschritt 226 durch das zweite weitere Fahrzeug 22 eine Allokierung (bzw. Zuteilung) von Ressourcen erfolgt und mittels einer im siebenundzwanzigsten Prozessschritt 227 an das Fahrzeug 20 gesendeten Nachricht die Verbindung zum zweiten weiteren Fahrzeug 22 aufgesetzt wird. Nach dem siebenundzwanzigsten Prozessschritt 227 ist der dritte Abschnitt 262 beendet bzw. abgeschlossen.

Ein achtundzwanzigster bis sechsundvierzigster Prozessschritt 228 - 246 sind Teil des achten Abschnitts 267, d.h. betreffen die Parallelverarbeitung bzw. das Parallelcomputing als Teil des Rechnerverbunds. Im achtundzwanzigsten Prozessschritt 228 findet eine Aktualisierung (bzw. ein Update) der Rahmenbedingungen (insbesondere beim Fahrzeug 20) statt; ferner werden die Aufgaben für die jeweiligen teilnehmenden Fahrzeuge eingeteilt. Im neunundzwanzigsten Prozessschritt 229 findet eine Aktualisierung bzw. ein Update bzw. eine Synchronisation der Parameter des Rechnerverbunds statt. Der dreißigste bis sechsunddreißigste Prozessschritt 230 - 236 ist Teil des neunten Abschnitts 268, welcher als Schleife (loop) bzw. Wiederholungsschleife konzipiert ist bzw. abläuft, d.h. die betreffenden Prozessschritte werden - solange die jeweiligen Voraussetzungen vorliegen - ggf. mehrfach durchlaufen. Im dreißigsten Prozessschritt 230 wird (insbesondere durch das Fahrzeug 20) die durch das erste weitere Fahrzeug 21 durchzuführende Aufgabe (als Teil des Rechnerverbunds) als Nachrichteninhalt einer Nachricht zum ersten weiteren Fahrzeug 21 gesandt und es wird insbesondere eine Aktualisierung bzw. ein Update der Rahmenbedingungen durchgeführt. Im einunddreißigsten Prozessschritt 231 wird durch das erste weitere Fahrzeug 21 die zugewiesene Aufgabe berechnet und eine Aktualisierung bzw. ein Update der Parameter bzw. Rahmenbedingungen durchgeführt. Im zweiunddreißigsten Prozessschritt 232 wird optional eine Aktualisierung bzw. ein Update bzw. eine Synchronisierung der Parameter des Rechnerverbunds, insbesondere zwischen dem ersten weiteren Fahrzeug 21 und der Anwendungsserverentität 140, durchgeführt. Im dreiunddreißigsten Prozessschritt 233 wird vom ersten weiteren Fahrzeug 21 zum Fahrzeug 20 das Ergebnis (der zugewiesenen Aufgabe) übermittelt und insbesondere eine Aktualisierung bzw. ein Update der Parameter bzw. Rahmenbedingungen übermittelt. Im vierunddreißigsten Prozessschritt 234 wird das vom ersten weiteren Fahrzeug 21 übersandte Ergebnis des Parallelcomputings vom Fahrzeug 20 verarbeitet sowie eine Aktualisierung bzw. ein Update der Rahmenbedingungen und/oder der Abrechnungsdaten vorgenommen. Im fünfunddreißigsten Prozessschritt 235 wird optional eine Aktualisierung bzw. ein Update bzw. eine Synchronisierung der Parameter des Rechnerverbunds, insbesondere zwischen dem Fahrzeug 20 und der Anwendungsserverentität 140, durchgeführt. Im sechsunddreißigsten Prozessschritt 236 wird durch das Fahrzeug 20 ein Abgleich der Parameter und Rahmenbedingungen bezüglich des ersten weiteren Fahrzeugs 21 vorgenommen und zum einen geprüft, ob das erste weitere Fahrzeug 21 noch weiter (für den Rechnerverbund) zur Verfügung steht, sowie zum anderen geprüft, ob noch weitere Aufgaben für das erste weitere Fahrzeug 21 vorliegen; falls eine dieser Prüfungen negativ ausfällt oder zu verneinen ist, findet ein Ausstieg aus der Wiederholungsschleife (Exit) statt.
Der siebenunddreißigste bis dreiundvierzigste Prozessschritt 237 - 243 ist Teil des zehnten Abschnitts 269, welcher als Schleife (loop) bzw. Wiederholungsschleife konzipiert ist bzw. abläuft, d.h. die betreffenden Prozessschritte werden - solange die jeweiligen Voraussetzungen vorliegen - ggf. mehrfach durchlaufen. Im siebenunddreißigsten Prozessschritt 237 wird (insbesondere durch das Fahrzeug 20) die durch das zweite weitere Fahrzeug 22 durchzuführende Aufgabe (als Teil des Rechnerverbunds) als Nachrichteninhalt einer Nachricht zum zweiten weiteren Fahrzeug 22 gesandt und es wird insbesondere eine Aktualisierung bzw. ein Update der Rahmenbedingungen durchgeführt. Im achtunddreißigsten Prozessschritt 238 wird durch das zweite weitere Fahrzeug 22 die zugewiesene Aufgabe berechnet und eine Aktualisierung bzw. ein Update der Parameter bzw. Rahmenbedingungen durchgeführt. Im neununddreißigsten Prozessschritt 239 wird optional eine Aktualisierung bzw. ein Update bzw. eine Synchronisierung der Parameter des Rechnerverbunds, insbesondere zwischen dem zweiten weiteren Fahrzeug 22 und der Anwendungsserverentität 140, durchgeführt. Im vierzigsten Prozessschritt 240 wird vom zweiten weiteren Fahrzeug 22 zum Fahrzeug 20 das Ergebnis (der zugewiesenen Aufgabe) übermittelt und insbesondere eine Aktualisierung bzw. ein Update der Parameter bzw. Rahmenbedingungen übermittelt. Im einundvierzigsten Prozessschritt 241 wird das vom zweiten weiteren Fahrzeug 22 übersandte Ergebnis des Parallelcomputings vom Fahrzeug 20 verarbeitet sowie eine Aktualisierung bzw. ein Update der Rahmenbedingungen und/oder der Abrechnungsdaten vorgenommen. Im zweiundvierzigsten Prozessschritt 242 wird optional eine Aktualisierung bzw. ein Update bzw. eine Synchronisierung der Parameter des Rechnerverbunds, insbesondere zwischen dem Fahrzeug 20 und der Anwendungsserverentität 140, durchgeführt. Im dreiundvierzigsten Prozessschritt 243 wird durch das Fahrzeug 20 ein Abgleich der Parameter und Rahmenbedingungen bezüglich des zweiten weiteren Fahrzeugs 22 vorgenommen und zum einen geprüft, ob das zweite weitere Fahrzeug 22 noch weiter (für den Rechnerverbund) zur Verfügung steht, sowie zum anderen geprüft, ob noch weitere Aufgaben für das zweite weitere Fahrzeug 22 vorliegen; falls eine dieser Prüfungen negativ ausfällt oder zu verneinen ist, findet ein Ausstieg aus der Wiederholungsschleife (Exit) statt.
Im vierundvierzigsten Prozessschritt 244 werden die Ergebnisse der Berechnungen oder Aufgaben durch das Fahrzeug 20 zusammengeführt und die Berechnungen abgeschlossen. Ferner wird der Ad-Hoc-Rechnerverbund beendet. Eine entsprechende Nachricht über die Beendigung des Ad-Hoc-Rechnerverbunds wird im fünfundvierzigsten Prozessschritt 245 zur Anwendungsserverentität 140 übermittelt, wobei hier insbesondere Informationen hinsichtlich zu aktualisierender Parameter und/oder Abrechnungsdaten umfasst sind. Im sechsundvierzigsten Prozessschritt 246 wird zwischen der Anwendungsserverentität 140, dem Fahrzeug 20, dem ersten weiteren Fahrzeug 21 und dem zweiten weiteren Fahrzeug 22 der Rechnerverbund beendet.

Gemäß der vorliegenden Erfindung ist es vorteilhaft möglich, dass in einem vollvernetzten intelligenten Verkehrswesen bzw. Verkehrssystem Fahrzeuge miteinander kommunizieren können; beispielsweise können über PC5 Sidelink 3GPP-konforme Mobilfunktechnik verwendet werden, um mit anderen Fahrzeugen zu kommunizieren; dies geht entweder mit Unterstützung des Mobilfunknetzes des Telekommunikationsnetzes 100 oder aber auch auf kurze Distanz direkt zwischen zwei Fahrzeugen (bzw. deren jeweiliger Endgeräte bzw. User Equipments). Ferner verfügt ein solches Mobilfunknetz im Bereich von V2X (also der Kommunikation zwischen einem (beliebigen) Fahrzeug und (beliebigen) weiteren Komponenten, etwa in Form von anderen Fahrzeugen oder aber auch in Form von, beispielsweise, (insbesondere ortsfesten oder nicht ortsfesten, d.h. beweglichen) Infrastrukturkomponenten) auch über standardisierte Architekturen und Methoden, wie Fahrzeuge, die sich in räumlicher Nähe zueinander befinden, zum einen gesichert miteinander kommunizieren können (direkt oder über das Mobilfunknetz) und zum anderen über sogenannte V2X Applications (oder Anwendungen) gemeinsam Anwendungen nutzen können, deren zentrale Einheit der sogenannte V2X Application Server ist. Auch sind für V2X Kommunikation Sicherheitsverfahren basierend auf Public Key Infrastrukturen (PKI) standardisiert. Aufbauend auf diesen PKI Infrastrukturen ist es möglich, die Sicherheit (Authentisierung, Autorisierung und Vertraulichkeit) der V2X Kommunikation zu implementieren. Alternativ besteht auch die Möglichkeit, dass alle Sicherheitsfunktionen auf Applikationsebene implementiert werden (V2X Application Server und V2X Applications).

Gemäß der vorliegenden Erfindung werden generell für die Sicherheit des Nachrichtenaustausch nutzbare Verfahren der V2X Kommunikation dazu genutzt, Fahrzeuge bzw. deren Computer (gesichert) in spezieller Weise zusammenzuschalten bzw. zu verbinden, dass es in koordinierter Weise und in abgesicherter Form möglich ist, einen Rechnerverbund zu bilden, mittels dem hochparallelisierte Algorithmen bearbeitet werden können. Wenn ein Fahrzeug temporär nur wenig seiner potenziellen bzw. verfügbaren Rechenkapazität belegt, so kann es diese nicht benötigte Kapazität in solch ein Rechenverbund (bzw. Rechnerverbund) einbringen. Erfindungsgemäß ist es insbesondere vorgesehen, dass die Einbringung von Rechenkapazität in einen solchen Rechenverbund (bzw. Rechnerverbund) dem Fahrzeug bzw. dessen Halter je nach grundliegendem Geschäftsmodell vergütet wird. Erfindungsgemäß ist es ferner bevorzugt, dass eine solche Abrechnung ebenfalls durch die angesprochenen V2X Verfahren, d.h. über den V2X Application Server, gesteuert werden; insbesondere ist es hierdurch erfindungsgemäß vorteilhaft möglich, auf dem V2X Application Server auch entsprechende Schnittstellen zu anderen Systemen zu implementieren.

Anwendungsbeispiele, in denen ein solcher Rechnerverbund erfindungsgemäß formiert wird umfassen beispielsweise Stausituationen, in denen Fahrzeuge beispielsweise nur vergleichsweise geringe Anteile ihrer Rechenleistung benötigen (etwa weil die relevanten Geschwindigkeiten oder Relativgeschwindigkeiten vergleichsweise klein sind) und da sich die Umgebung somit kaum ändert und daher weniger intensiv analysiert werden muss. Da sich insbesondere in solch einer Stausituation vergleichsweise viele Fahrzeuge auf vergleichsweise wenig Raum befinden, kann, beispielsweise mittels PC5-Silelink (etwa im Umkreis von ca. 400m bzw. bis zu etwa 400m) oder einer anderen Kurzstrecken-Übertragungstechnik, ein hocheffizientes Netzwerk aufgebaut werden. Die Steuerungsfunktionen sowie Authentisierung, Autorisierung und Accounting (AAA) übernimmt erfindungsgemäß der V2X Application Server (d.h. die Anwendungsserverentität 140), mit dem (bzw. mit der) die Fahrzeuge über die standardisierten V2X Funktionalitäten und Schnittstellen kommunizieren.
Ein weiteres Beispiel betrifft eine Situation auf einem Parkplatz: Viele Fahrzeuge stehen vergleichsweise dicht an dicht. Da sie im parkenden Zustand in der Regel bzw. weit überwiegend überhaupt nicht am Verkehr teilnehmen, sind die belegten Rechenressourcen ebenfalls nur sehr gering. Wiederum ist es erfindungsgemäß vorgesehen, dass spontan bzw. ad hoc ein hochperformanter Rechnerverbund aufgebaut wird.

Erfindungsgemäß ist es insbesondere vorteilhaft möglich, dass ein solcher Rechnerverbund als eine Alternative zum Mobile Edge Computing gesehen wird, wie es beispielsweise in 5G stark verwendet werden kann. Ähnlich wie beim Edge Computing kann Rechenkapazität in kurzer lokaler Distanz abgerufen werden, anstatt auf einen zentralisierten Server angewiesen zu sein. Wenn nun z.B. eine stark parallelisierbare Aufgabe berechnet werden soll und/oder die Edge Cloud schon voll ausgelastet ist und/oder keine Edge Cloud vorhanden/verfügbar ist, ist es erfindungsgemäß vorteilhaft möglich, dass ein Ad-Hoc Rechnerverbundnetzwerk von verschiedenen, insbesondere in räumlicher Nähe sich befindender Fahrzeuge, verwendet wird. Hierbei muss die anfordernde Applikation (bzw. Anwendung) nicht zwingend von einem Fahrzeug (bzw. einem der Fahrzeuge) ausgehen, sondern kann auch extern außerhalb des Straßenverkehrs ihren Ursprung haben. Stark parallelisierte Rechnerverbunde werden z.B. bei der Errechnung von Wettersimulationen benötigt. Ein gemäß dem erfindungsgemäßen Verfahren realisiertes ad-Hoc Rechnerverbundnetzwerk bietet hier das Potential, viele ungenutzte Ressourcen zu bieten, die von der anfordernden Applikation kurzfristig allokiert werden können.

Nachfolgend werden die im Ausführungsbeispiel gemäß der Figur 2 beschriebenen Elemente, Abschnitte bzw. Prozessschritte nochmals ergänzt:

Trigger (zweiter Abschnitt 261 bzw. erster Prozessschritt 201):
Eine Applikation, hier ausgehend vom Fahrzeug 20, benötigt zur Berechnung einer großen Rechenaufgabe zusätzliche Ressourcen. Durch die Charakteristika der Rechenaufgabe und der aktuellen Situation, beschließt das Fahrzeug 20 dazu einen Ad Hoc Rechnerverbund aufzubauen.

### Technischer Prozess:

Setze Rechnerverbund auf (dritter Abschnitt 262, zweiter bis siebenundzwanzigster Prozessschritt 202 - 227, inklusive des vierten, fünften und sechsten Abschnitts 264, 265, 266):
Um einen Ad Hoc Rechnerverbund aufzubauen definiert das Fahrzeug 20 vorerst die Rahmenbedingungen wie die benötigte Rechenleistung, die Mindestanforderung für Hardware / Software, den Kommunikationskanal (PC5 Sidelink Mode 3 oder 4), die Position bzw. den Geschwindigkeitsvektor (zur Berechnung des für den Rechnerverbund abgedeckten Umkreis für andere Fahrzeuge), das vorgeschlagene Vergütungsmodell incl. Preis für die Rechenaufgabe, etc.
Um bei potenziellen weiteren Fahrzeugen 21, 22, 23, 24 im Umkreis die Teilnahme am Rechnerverbund anzufragen, sendet das Fahrzeug 20 die Anfrage mit den Rahmenbedingungen (vierter Abschnitt 263, fünfter Abschnitt 264), entweder über das Mobilfunknetz (PC Sidelink Mode 3), welches die Anfrage per Multicast an Fahrzeuge im Umkreis sendet oder per PC Sidelink Mode 4 Broadcast an die im Umkreis befindlichen Fahrzeuge. Hierbei sendet das initiierende Fahrzeug 20 die Anfragen insbesondere signiert (mit den Zertifikaten der genutzten PKI) aus. Damit wird die Zugehörigkeit zum entsprechenden System für den Aufbau und die Nutzung von Ad-hoc-Rechnerverbunden und die Autorisierung für solche Anfragen bestätigt.

Die weiteren Fahrzeuge 21, 22, 23, 24, die die Anfrage erhalten, prüfen die Signatur und damit die Berechtigung der Anfrage und die Rahmenbedingungen und entscheiden abhängig von eigener Hardware / Software und/oder Auslastung eigener Ressourcen und/oder der Position und des Geschwindigkeitsvektors (wodurch sich insbesondere die voraussichtliche Aufenthaltsdauer im Umkreis des initiierenden Fahrzeugs 20 ableitet) und/oder der Kompatibilität mit der genutzten Billing- bzw. Charging-Technologie und/oder dem vorgeschlagenen Verrechnungsangebot, etc., ob sie anbieten am Rechnerverbund teilzunehmen. Bei Bedarf kann der jeweilige Fahrer des Fahrzeuges gefragt werden, ob das Angebot angenommen werden soll.
Das Ergebnis (insbesondere in Form der Nachrichten des fünften, siebten, neunten bzw. elften Prozessschritts 205, 207, 209, 211) senden die weiteren Fahrzeuge 21, 22, 23, 24 zusammen mit den eigenen Parametern wie: die verfügbare Ressourcen, die Position und den Geschwindigkeitsvektor (und ggf. zusätzlich die voraussichtliche Aufenthaltsdauer im Umkreis des initiierenden Fahrzeugs 20), die Abrechnungsdaten, ein akzeptiertes Abrechnungsmodell, etc. in insbesondere signierter Form (womit sich die weiteren Fahrzeuge 21, 22, 23, 24 ihrerseits autorisieren) an das initiierende Fahrzeug 20 (entweder über das Mobilfunknetz, Mode3, oder direkt, Mode 4).
Diese Prüfung wird bei nicht netzbasierten Funktechnologien wie PC5 Sidelink Mode 4 auch den Zeitraum abprüfen, in welchem die Verbindung zwischen dem initiierenden Fahrzeug 20 und den weiteren Fahrzeugen 21, 22, 23, 24 garantiert ist, was durch die bekannten Navigationsrouten (oder Stillstand auf Parkplatz), also bekannte zukünftigen Aufenthaltsorte, durchgeführt werden kann. Ist also das den Rechnerverbund initiierende Fahrzeug 20 aktuell oder in dem von ihm anvisierten Zeitfenster für den Verbund bewegt, so wird es seine Positionsentwicklung für den Zeitraum des Zeitfensters an die potenziellen weiteren Fahrzeuge, z.B. in Form einer Routeninformation, bei dem Request auf Rechnerverbund (vierter Abschnitt 263) mitsenden. Das potenziell teilnehmende weitere Fahrzeug 21, 22, 23, 24 kann dann aufgrund seiner zukünftigen Positionen entscheiden, ob während des gesamten Zeitfensters der maximale Abstand nicht überschritten wird, etwa eine Distanz von kleiner als 400m. Das weitere Fahrzeug 21, 22, 23, 24 kann auch als Antwort liefern, dass lediglich ein bestimmter Teil ab der aktuellen Zeit (etwa nurx%<=100% ab der aktuellen Zeit) das Kriterium der Distanz erfüllt und deswegen nur diese x% zur Mitarbeit angeboten werden. Im weiteren Verlauf ist es bevorzugt vorgesehen, dass aktualisierte Positionen laufend zwischen dem initiierenden Fahrzeug 20 und den weiteren Fahrzeugen 21, 22, 23, 24 (bzw. jeweils zwischen einem der weiteren Fahrzeuge 21, 22, 23, 24 und dem initiierenden Fahrzeug 20) ausgetauscht werden, sofern ein Risiko auf Distanzüberschreitung detektiert wird. Ein weiteres Fahrzeug 21, 22, 23, 24 kann die ihm zugewiesene Teilaufgabe aber auch zu jeder Zeit an das initiierende Fahrzeug 20 als unfertig oder teilfertig zurückgeben und aus dem Verbund ausscheiden. Das initiierende Fahrzeug 20 wird dann Ersatz suchen.
Somit empfängt das initiierende Fahrzeug 20 die Antworten der weiteren Fahrzeuge 21, 22, 23, 24 (fünfter Abschnitt 264), prüft die Signaturen der Antworten, stimmt die Rahmenbedingungen mit den einzelnen FZG-Parametern ab und entscheidet, welche der weiteren Fahrzeuge 21, 22, 23, 24 am Rechnerverbund teilnehmen sollen bzw. können (zwölfter Prozessschritt 212).

Anschließend sendet das Fahrzeug 20 (bzw. dessen V2X Application) die entsprechenden Informationen über das aufzusetzende Adhoc Netwerk (inkl. der teilnehmenden weiteren Fahrzeuge 21, 22, 23, 24) an den V2X Application Server (bzw. die Anwendungsserverentität 140), der (bzw. die) ab dann die Steuerung übernimmt. Wenn die Entscheidung für ein Fahrzeug positiv ist (im in Figur 2 dargestellten Beispiel beim ersten und zweiten weiteren Fahrzeug 21, 22, vgl. den sechsten Abschnitt 265), allokiert das jeweilige Fahrzeug, gesteuert durch den V2X Application Server (die Anwendungsserverentität 140), nun einen vordefinierten Teil seiner Ressourcen für den Computerverbund. Es räumt dem anfragenden Fahrzeug 20 entsprechende Rechte ein, und gibt den allokierten Teil für das anfragende Fahrzeug 20 frei. Während der Teilnahme werden permanent Abrechnungs- bzw. Billingdaten erhoben.

Nachdem der Rechnerverbund durch den V2X Application Server (die Anwendungsserverentität 140) aufgesetzt wurde, kann das initiierende Fahrzeug 20 die Leitung bzw. die Koordination übernehmen. Die Kommunikation erfolgt grundsätzlich über V2X Mode 3 oder Mode 4. Je nach Implementierung kann das initiierende Fahrzeug 20 oder auch die verbundenen Fahrzeuge 21, 22 bestimmte Nachrichten über den V2X Application Server (Anwendungsserverentität 140) laufen bzw. gewisse Aktionen durch diesen steuern lassen.

Parallel Computing, vgl. den achten Abschnitt 267:
Nach dem Aufsetzen des Rechnerverbundes teilt das Fahrzeug 20 die Aufgaben für die weiteren Fahrzeuge 21, 22 ein und verteilt diese über die bestehenden Verbindungen. Dabei werden immer wieder die Rahmenbedingungen durch das Fahrzeug 20 aktualisiert. Die eingebundenen Fahrzeuge 20, 21, 22 bearbeiten die Aufgaben und aktualisieren dabei fortlaufend ihre Parameter. Sollten die Rahmenbedingungen und die Fahrzeugparameter einen weiteren Verbleib des Fahrzeugs im Verbund nicht zulassen, wird die Verbindung beendet.
Die Verbindung kann sowohl vom Initiator, d.h. dem Fahrzeug 20, als auch von den anderen Fahrzeugen 21, 22 im Verbund beendet werden. Wenn das geschieht, werden Abrechnungsdaten final ausgetauscht, die Ressourcenfreigabe wird beendet, und die Ressourcen stehen wieder dem eigenen Fahrzeug zur Verfügung.
Wenn die Verbindung mit den anderen Fahrzeugen beendet ist, führt das Fahrzeug 20 die Ergebnisse zusammen und schließt die ausstehenden Berechnungen lokal ab. Damit ist der Ad Hoc Rechnerverbund beendet.
Die Billing-Informationen werden während der Berechnungen im Rechnerverbund ausgetauscht. Die Abrechnung selbst wird durch den V2X Application Server (Anwendungsserverentität 140) gesteuert, dem dann alle beteiligten Fahrzeuge die entsprechenden Informationen zur Verfügung stellen.

Besonders bevorzugt ist es erfindungsgemäß möglich, dass - sofern mehr Rechenressourcen (und damit typischerweise mehr Fahrzeuge) benötigt werden und es die Situation es zulässt-, sich die weiteren Fahrzeuge 21, 22, 23, 24 dem initiierenden Fahrzeug 20 annähern, um die Übertragungsgeschwindigkeit für Kurzstrecken-Übertragung wie PC5 zu optimieren. (z.B. auf einem Parkplatz).

## Patentansprüche

1. Verfahren zur abgesicherten Bereitstellung von Rechenleistung durch eine Mehrzahl von teilnehmenden Fahrzeugen (20) als Teil eines intelligenten Verkehrssystems [intelligent transport system] umfassend wenigstens ein Telekommunikationsnetz (100), wobei jedes der Mehrzahl von teilnehmenden Fahrzeugen (20) wenigstens eine zumindest zeitweise und/oder teilweise auslagerbare Rechenressource [computing resource] (22) aufweist, wobei die von der Mehrzahl der teilnehmenden Fahrzeugen (20) auslagerbaren Rechenressourcen (22) als Rechnerverbund einer Anwendungsserverentität [application server entity] (140) und/oder einer Edge-Cloud-Funktionalität (150) und/oder einem weiteren Fahrzeug (21) zur Verfügung gestellt wird, wobei das Verfahren die nachfolgenden Verfahrensschritte aufweist:
-- in einem ersten Schritt wird der Rechnerverbund der Mehrzahl von teilnehmenden Fahrzeugen (20) initiiert,
-- in einem zweiten Schritt stellt der Rechnerverbund die auslagerbaren Rechenressourcen (22) der Anwendungsserverentität (140) und/oder der Edge-Cloud-Funktionalität (150) und/oder dem weiteren Fahrzeug (21) zur Verfügung.

2. Verfahren nach Anspruch 1, **dadurch gekennzeichnet, dass** in einem dritten Schritt der Rechnerverbund pausiert, unterbrochen oder beendet wird, wobei insbesondere ein Vergütungsmodel für die zur Verfügung gestellte Rechenressource angewandt wird, wobei insbesondere der Rechnerverbund zur Bearbeitung oder Durchführung von hochparallelisierten Berechnungen gebildet wird.

3. Verfahren nach einem der vorhergehenden Ansprüche, **dadurch gekennzeichnet, dass** zur Initiierung des Rechnerverbunds und zur Realisierung der Bereitstellung von Rechenleistung an die Anwendungsserverentität (140) und/oder an die Edge-Cloud-Funktionalität (150) und/oder an das weitere Fahrzeug (21) das Telekommunikationsnetz (100) genutzt wird, insbesondere eine Fahrzeug-zu-Fahrzeug Kommunikationsfunktionalität, V2V, vehicle-to-vehicle communication functionality, und/oder eine Fahrzeug-zu-X Kommunikationsfunktionalität, V2X, vehicle-to-X communication functionality, insbesondere unter Nutzung eines PC5 sidelink Modus 3 oder Modus 4.

4. Verfahren nach einem der vorhergehenden Ansprüche, **dadurch gekennzeichnet, dass** die Initiierung - im ersten Schritt - des Rechnerverbunds eine Authentisierung und/oder eine Authorisierung und/oder die Herstellung einer Vertraulichkeit oder einer Verschlüsselung der Mehrzahl von teilnehmenden Fahrzeugen (20) umfasst, insbesondere unter Verwendung einer Öffentliche-Schlüssel-Infrastruktur, public key infrastructure, wobei insbesondere die Anwendungsserverentität (140) und/oder die Edge-Cloud-Funktionalität (150) die Authentisierung und/oder die Authorisierung und/oder die Herstellung der Vertraulichkeit oder der Verschlüsselung der Mehrzahl von teilnehmenden Fahrzeugen (20) übernimmt.

5. Verfahren nach einem der vorhergehenden Ansprüche, **dadurch gekennzeichnet, dass** zumindest ein Teil der Mehrzahl von teilnehmenden Fahrzeugen (20) zum autonomen Fahren mit wenigstens dem Automatisierungsgrad 2 (level 2, Assistierter Modus), bevorzugt wenigstens dem Automatisierungsgrad 3 (level 3, Automatisierter Modus), besonders bevorzugt wenigstens dem Automatisierungsgrad 4 (level 4, Autonomer Modus, Hochautomatisierung), besonders bevorzugt wenigstens dem Automatisierungsgrad 5 (level 5, Autonomer Modus, Vollautomatisierung) ausgebildet sind.

6. Verfahren nach einem der vorhergehenden Ansprüche, **dadurch gekennzeichnet, dass** zumindest ein Teil der Mehrzahl von teilnehmenden Fahrzeugen (20) sich in einem Zustand geringerer Verkehrsanforderungen befindet, insbesondere in einer Stausituation und/oder einer Situation verminderter Geschwindigkeit und/oder in einer Park- oder Haltesituation des Fahrzeugs, wobei es sich im Fall einer Park- oder Haltesituation insbesondere um eine Ladesituation eines batterieelektrischen Fahrzeugs oder eines Plug-In-Hybrid-Fahrzeugs handelt.

7. Verfahren nach einem der vorhergehenden Ansprüche, **dadurch gekennzeichnet, dass** die Initiierung - im ersten Schritt - des Rechnerverbunds umfasst, dass eines der Fahrzeuge der Mehrzahl von teilnehmenden Fahrzeugen (20) den Rechnerverbund initiiert und insbesondere eine Anfragenachricht an andere Fahrzeuge in der Umgebung sendet.

8. System zur abgesicherten Bereitstellung von Rechenleistung durch eine Mehrzahl von teilnehmenden Fahrzeugen (20) als Teil eines intelligenten Verkehrssystems umfassend wenigstens ein Telekommunikationsnetz (100), wobei jedes der Mehrzahl von teilnehmenden Fahrzeugen (20) wenigstens eine zumindest zeitweise und/oder teilweise auslagerbare Rechenressource (22) aufweist, wobei die von der Mehrzahl der teilnehmenden Fahrzeugen (20) auslagerbaren Rechenressourcen (22) als Rechnerverbund einer Anwendungsserverentität (140) und/oder einer Edge-Cloud-Funktionalität (150) und/oder einem weiteren Fahrzeug (21) zur Verfügung gestellt wird, wobei das System derart konfiguriert ist, dass:
-- der Rechnerverbund der Mehrzahl von teilnehmenden Fahrzeugen (20) initiiert wird,
-- der Rechnerverbund die auslagerbaren Rechenressourcen (22) der Anwendungsserverentität (140) und/oder der Edge-Cloud-Funktionalität (150) und/oder dem weiteren Fahrzeug (21) zur Verfügung stellt.

9. Telekommunikationsnetz (100), insbesondere umfassend eine Anwendungsserverentität (140) und/oder eine Edge-Cloud-Funktionalität (150), zur Verwendung in einem System nach Anspruch 8 oder einem Verfahren nach einem der Ansprüche 1 bis 7.

10. Computerprogramm umfassend Befehle, mit deren Hilfe die Schritte eines Verfahrens nach einem der Ansprüche 1 bis 7 durchführbar sind, wenn das Computerprogramm auf einer programmierbaren Einrichtung, insbesondere auf einer programmierbaren Einrichtung des Fahrzeugs und/oder eines Netzknotens des Telekommunikationsnetzes (100), ausgeführt wird.

11. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 10 speichert oder überträgt oder wobei das computerlesbare Medium oder das Datenträgersignal den auf der programmierbaren Einrichtung, insbesondere auf einer programmierbaren Einrichtung des Fahrzeugs und/oder eines Netzknotens des Telekommunikationsnetzes (100), auszuführenden Teil des Computerprogramms nach Anspruch 10 speichert oder überträgt.

## Geänderte Patentansprüche

### Geänderte Patentansprüche gemäss Regel 137(2) EPÜ.

1. Verfahren zur abgesicherten Bereitstellung von Rechenleistung durch eine Mehrzahl von teilnehmenden Fahrzeugen (20) als Teil eines intelligenten Verkehrssystems [intelligent transport system] umfassend wenigstens ein Telekommunikationsnetz (100), wobei jedes der Mehrzahl von teilnehmenden Fahrzeugen (20, 21, 22, 23, 24) wenigstens eine zumindest zeitweise und/oder teilweise auslagerbare Rechenressource [computing resource] (22) aufweist, wobei die von der Mehrzahl der teilnehmenden Fahrzeugen (20, 21, 22, 23, 24) auslagerbaren Rechenressourcen (22) als Rechnerverbund einer Anwendungsserverentität [application server entity] (140) und/oder einer Edge-Cloud-Funktionalität (150) und/oder einem weiteren Fahrzeug zur Verfügung gestellt wird, wobei das Verfahren die nachfolgenden Verfahrensschritte aufweist:
-- in einem ersten Schritt wird der Rechnerverbund der Mehrzahl von teilnehmenden Fahrzeugen (20, 21, 22, 23, 24) initiiert, wobei die Initiierung des Rechnerverbunds eine Authentisierung und/oder eine Authorisierung und/oder die Herstellung einer Vertraulichkeit oder einer Verschlüsselung der Mehrzahl von teilnehmenden Fahrzeugen (20, 21, 22, 23, 24) unter Verwendung einer Öffentliche-Schlüssel-Infrastruktur, public key infrastructure, umfasst,
-- in einem zweiten Schritt stellt der Rechnerverbund die auslagerbaren Rechenressourcen (22) der Anwendungsserverentität (140) und/oder der Edge-Cloud-Funktionalität (150) und/oder dem weiteren Fahrzeug zur Verfügung.

2. Verfahren nach Anspruch 1, **dadurch gekennzeichnet, dass** in einem dritten Schritt der Rechnerverbund pausiert, unterbrochen oder beendet wird, wobei insbesondere ein Vergütungsmodel für die zur Verfügung gestellte Rechenressource angewandt wird, wobei insbesondere der Rechnerverbund zur Bearbeitung oder Durchführung von hochparallelisierten Berechnungen gebildet wird.

3. Verfahren nach einem der vorhergehenden Ansprüche, **dadurch gekennzeichnet, dass** zur Initiierung des Rechnerverbunds und zur Realisierung der Bereitstellung von Rechenleistung an die Anwendungsserverentität (140) und/oder an die Edge-Cloud-Funktionalität (150) und/oder an das weitere Fahrzeug das Telekommunikationsnetz (100) genutzt wird, insbesondere eine Fahrzeug-zu-Fahrzeug Kommunikationsfunktionalität, V2V, vehicle-to-vehicle communication functionality, und/oder eine Fahrzeug-zu-X Kommunikationsfunktionalität, V2X, vehicle-to-X communication functionality, insbesondere unter Nutzung eines PC5 sidelink Modus 3 oder Modus 4.

4. Verfahren nach einem der vorhergehenden Ansprüche, **dadurch gekennzeichnet, dass** die Anwendungsserverentität (140) und/oder die Edge-Cloud-Funktionalität (150) die Authentisierung und/oder die Authorisierung und/oder die Herstellung der Vertraulichkeit oder der Verschlüsselung der Mehrzahl von teilnehmenden Fahrzeugen (20, 21, 22, 23, 24) übernimmt.

5. Verfahren nach einem der vorhergehenden Ansprüche, **dadurch gekennzeichnet, dass** zumindest ein Teil der Mehrzahl von teilnehmenden Fahrzeugen (20, 21, 22, 23, 24) zum autonomen Fahren mit wenigstens dem Automatisierungsgrad 2 (level 2, Assistierter Modus), bevorzugt wenigstens dem Automatisierungsgrad 3 (level 3, Automatisierter Modus), besonders bevorzugt wenigstens dem Automatisierungsgrad 4 (level 4, Autonomer Modus, Hochautomatisierung), besonders bevorzugt wenigstens dem Automatisierungsgrad 5 (level 5, Autonomer Modus, Vollautomatisierung) ausgebildet sind.

6. Verfahren nach einem der vorhergehenden Ansprüche, **dadurch gekennzeichnet, dass** zumindest ein Teil der Mehrzahl von teilnehmenden Fahrzeugen (20, 21, 22, 23, 24) sich in einem Zustand geringerer Verkehrsanforderungen befindet, insbesondere in einer Stausituation und/oder einer Situation verminderter Geschwindigkeit und/oder in einer Park- oder Haltesituation des Fahrzeugs, wobei es sich im Fall einer Park- oder Haltesituation insbesondere um eine Ladesituation eines batterieelektrischen Fahrzeugs oder eines Plug-In-Hybrid-Fahrzeugs handelt.

7. Verfahren nach einem der vorhergehenden Ansprüche, **dadurch gekennzeichnet, dass** die Initiierung - im ersten Schritt - des Rechnerverbunds umfasst, dass eines der Fahrzeuge der Mehrzahl von teilnehmenden Fahrzeugen (20, 21, 22, 23, 24) den Rechnerverbund initiiert und eine Anfragenachricht an andere Fahrzeuge in der Umgebung sendet.

8. Verfahren nach Anspruch 7, **dadurch gekennzeichnet, dass** das initiierende Fahrzeug (20) eine unter Verwendung der Öffentliche-Schlüssel-Infrastruktur signierte Anfragenachricht an andere Fahrzeuge (21, 22, 23, 24) in der Umgebung sendet, wobei die Anfragenachricht Rahmenbedingungen für die Teilnahme am Rechnerverbund enthält, wobei jedes der anderen Fahrzeuge (21, 22, 23, 24) die Signatur prüft und in Abhängigkeit von
-- der fahrzeugeigenen Hardware und Software,
-- der Auslastung fahrzeugeigener Ressourcen,
-- der Position und des Geschwindigkeitsvektors,
-- der Kompatibilität mit der genutzten Billing- bzw. Charging-Technologie, und/oder
-- dem vorgeschlagenen Verrechnungsangebot,
entscheidet, ob es am Rechnerverbund teilnimmt, und eine unter Verwendung der Öffentliche-Schlüssel-Infrastruktur signierte Antwortnachricht mit fahrzeugeigenen Parametern an das initiierende Fahrzeug sendet.

9. Verfahren nach Anspruch 8, **dadurch gekennzeichnet, dass** die Rahmenbedingungen für die Teilnahme am Rechnerverbund mindestens eine der folgenden Angaben enthalten:
-- benötigte Rechenleistung,
-- die Mindestanforderung für Hardware und Software,
-- den Kommunikationskanal, insbesondere PC5 Sidelink Modus 3 oder Modus 4),
-- die Position und den Geschwindigkeitsvektor des Fahrzeugs,
-- das vorgeschlagene Vergütungsmodell.

10. Verfahren nach Anspruch 8 oder 9, **dadurch gekennzeichnet, dass**, dass die fahrzeugeigenen Parameter mindestens einen der folgenden Parameter enthalten:
-- die verfügbare Ressourcen des Fahrzeugs,
-- die Position und den Geschwindigkeitsvektor,
-- Abrechnungsdaten,
-- ein akzeptiertes Abrechnungsmodell.

11. System zur abgesicherten Bereitstellung von Rechenleistung durch eine Mehrzahl von teilnehmenden Fahrzeugen (20, 21, 22, 23, 24) als Teil eines intelligenten Verkehrssystems umfassend wenigstens ein Telekommunikationsnetz (100), wobei jedes der Mehrzahl von teilnehmenden Fahrzeugen (20, 21, 22, 23, 24) wenigstens eine zumindest zeitweise und/oder teilweise auslagerbare Rechenressource (22) aufweist, wobei die von der Mehrzahl der teilnehmenden Fahrzeugen (20, 21, 22, 23, 24) auslagerbaren Rechenressourcen (22) als Rechnerverbund einer Anwendungsserverentität (140) und/oder einer Edge-Cloud-Funktionalität (150) und/oder einem weiteren Fahrzeug zur Verfügung gestellt wird, wobei das System derart konfiguriert ist, dass:
-- der Rechnerverbund der Mehrzahl von teilnehmenden Fahrzeugen (20, 21, 22, 23, 24) initiiert wird, wobei die Initiierung des Rechnerverbunds eine Authentisierung und/oder eine Authorisierung und/oder die Herstellung einer Vertraulichkeit oder einer Verschlüsselung der Mehrzahl von teilnehmenden Fahrzeugen (20, 21, 22, 23, 24) unter Verwendung einer Öffentliche-Schlüssel-Infrastruktur, public key infrastructure, umfasst,
-- der Rechnerverbund die auslagerbaren Rechenressourcen (22) der Anwendungsserverentität (140) und/oder der Edge-Cloud-Funktionalität (150) und/oder dem weiteren Fahrzeug zur Verfügung stellt.

12. Telekommunikationsnetz (100), insbesondere umfassend eine Anwendungsserverentität (140) und/oder eine Edge-Cloud-Funktionalität (150), zur Verwendung in einem System nach Anspruch 11 oder einem Verfahren nach einem der Ansprüche 1 bis 10.

13. Computerprogramm umfassend Befehle, mit deren Hilfe die Schritte eines Verfahrens nach einem der Ansprüche 1 bis 10 durchführbar sind, wenn das Computerprogramm auf einer programmierbaren Einrichtung, insbesondere auf einer programmierbaren Einrichtung des Fahrzeugs und/oder eines Netzknotens des Telekommunikationsnetzes (100), ausgeführt wird.

14. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 13 speichert oder überträgt oder wobei das computerlesbare Medium oder das Datenträgersignal den auf der programmierbaren Einrichtung, insbesondere auf einer programmierbaren Einrichtung des Fahrzeugs und/oder eines Netzknotens des Telekommunikationsnetzes (100), auszuführenden Teil des Computerprogramms nach Anspruch 13 speichert oder überträgt.
